# EUROPEAN PATENT APPLICATION

(11) **EP 1 112 914 A2**
(43) Date of publication of application: **04.07.2001**
(21) Application number: 00109450.7
(22) Date of filing: 03.05.2000
(51) Int. Cl.: B62D 25/08

(54) **Reinforcement structure for apron panel unit of automobile**

(30) Priority: 31.12.1999 KR 9968304
(71) Applicant: Hyundai Motor Company, Seoul (KR)
(72) Inventor: Park, Jong-Ho, Nam-gu, Ulsan (KR)
(74) Representative: Viering, Jentschura & Partner

(57) **Abstract**

A reinforcement structure for apron unit (5) of automobile, wherein a joined area between an apron unit (5) and a cowl unit (7) inside an engine room (4) is further reinforce by a reinforcement member, such that even the shock transmitted to the body of an automobile during offset collision minimizes deformation of the cowl unit (7) thereby promoting safety of passengers inside the automobile, the apron unit (5) of automobile formed by a rear end of a front inner apron panel (12) thereof joined by a front cowl panel (14) of a cowl unit via an apron extension panel (13), wherein the rear end of the front inner apron panel joins the front cowl panel via a reinforcement bracket (20) integrally having a first bent surface, a second bent surface and a flange surface extended from upper/lower sides of the first and second bent surfaces to be bent toward one direction.

## Description

### BACKGROUND OF THE INVENTION

### FIELD OF THE INVENTION

The present invention relates to an apron panel unit of an automobile, and more particularly to a reinforcement structure for apron unit of automobile adapted to add a separate reinforcement member between an apron panel and a cowl panel to reduce deformation of the cowl panel during front offset collision, thereby promoting safety of passengers.

### DESCRIPTION OF THE PRIOR ART

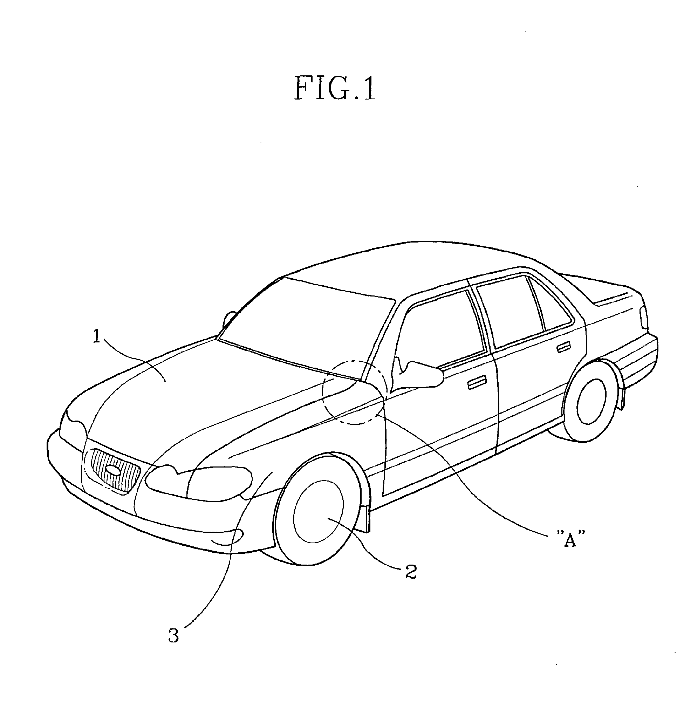

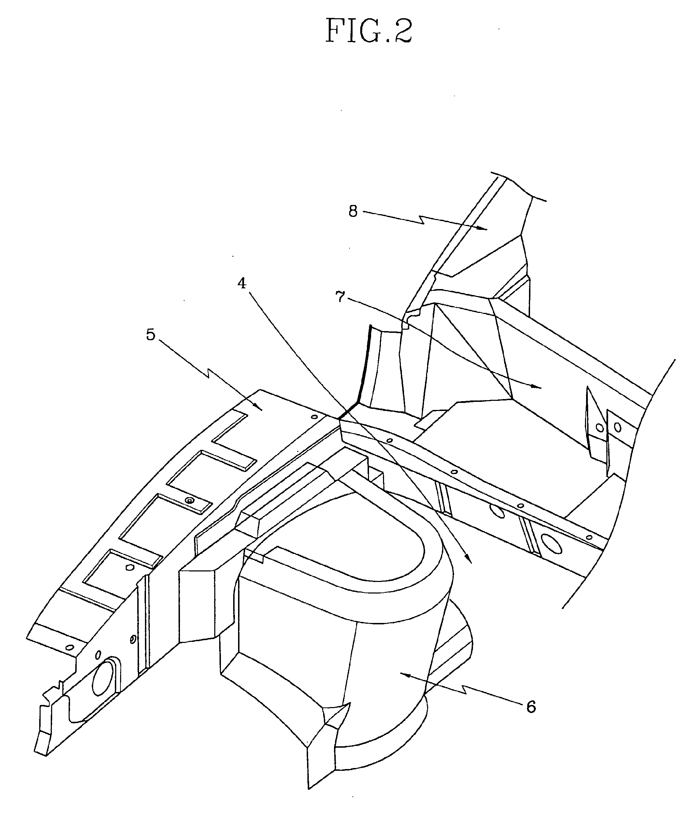

Generally, a front body of an automobile includes a hood unit 1 openably and closeably disposed at an engine room for mounting various parts of engine and power transmission system, and a fender unit 3 for encompassing wheels 2 at left and right sides of the hood unit 1, as illustrated in Figure 1, while an engine room 4 in turn includes an apron unit 5 horizontally and lengthily disposed therein, a wheel housing unit 6 protruded into the apron unit 5, a cowl unit 7 horizontally disposed inside an automobile body for partitioning the engine room 4 and an inside of the automobile and a front filler unit 8 mounted at a slight inclination upward from a tip end of the cowl unit 7, as illustrated in Figure 2 for illustrating an inside of "A" part of Figure 1.

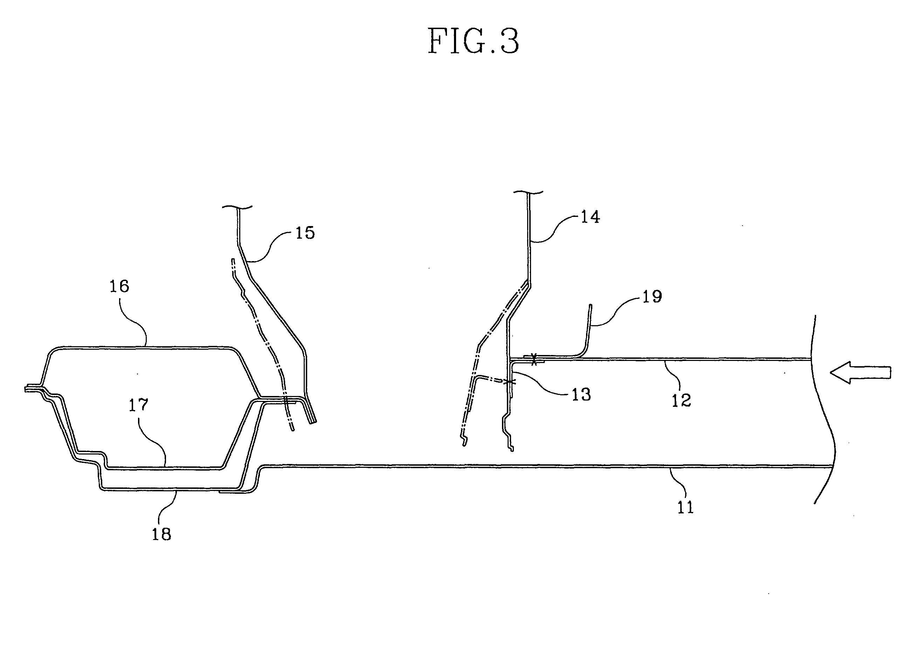

Meanwhile, a section of joined area between the apron unit 5 and the cowl unit 7 is mounted with a front outer apron panel 11 and a front inner apron panel 12 for forming the apron unit 5, each panel 11 and 12 lengthily extended from both sides of automobile body toward external inside and inner inside of the automobile, while a rear end of the front inner apron panel 12 is joined by a tip end of a front cowl panel 14 forming the cowl unit 7 through an apron extension panel 13 bent toward the external inside of the automobile, as illustrated in Figure 3.

Furthermore, a tip end of a rear cowl panel 15 forming the cowl unit 7 along with the front filler unit 8 is joined by each tip end of inner filler panel 16, filler reinforcement panel 17 and outer filler panel 18 joined to form respective closed surfaces to thereby construct the front filler unit 8, while a rear tip end of the front external apron panel 11 contacts the outer filler panel 18.

A joined area between the front inner apron panel 12 and the apron extension panel 13 is coupled by a tip end of wheel housing reinforcement panel 19.

However, a shock generated from an offset collision of automobile is transmitted through the apron unit 5 in the front automobile body thus constructed, such that the shock is then transmitted to the front filler unit 8 via the apron unit 5 and through the cowl unit 7. At this time, the front inner apron panel 12 of the apron panel 5 is pushed back by the shock according to the offset collision and again transmitted toward the front cowl panel 14 forming the cowl unit 7 through the apron extension panel 13.

As a result thereof, the front cowl panel 14 is pushed back by the shock transmitted via the front inner apron panel 12, by which, the rear cowl panel 15 constructing the cowl unit along with the front cowl panel 14 is also pushed back to thereby push the front filler unit 8.

Meanwhile, the shock generated from the offset collision accident thus described is further aggravated as a tip end of apron extension panel 13 connecting the front cowl panel 14 forming the cowl unit 7 and the front inner apron panel 12 constructing the apron unit 5 is detached from the front inner apron panel 12, which occurs when a joined area between the front inner apron panel 12 and the apron extension panel 13 is separated by the shock.

Consequently, there is a problem in that safety of the passengers inside the automobile are greatly threatened when the cowl unit 7 and the front filler unit 8 are sequentially pushed backward to thereby be deformed by the shock transmitted through the apron unit 5 during the offset collision accident thus described.

### SUMMARY OF THE INVENTION

The present invention is disclosed to solve the aforementioned problem and it is an object of the present invention to provide a reinforcement structure for apron unit of automobile adapted to add a separate reinforcement member at a joined area between an apron unit and a cowl panel to reinforce a structural strength of the joined area, thereby minimizing deformation of automobile body during offset collision accident for better safety of passengers.

In accordance with the object of the present invention, there is provided a reinforcement structure for apron unit of automobile, the apron unit formed by a rear end of a front inner apron panel thereof joined by a front cowl panel of a cowl unit via an apron extension panel, wherein the rear end of the front inner apron panel joins a front cowl panel via a reinforcement bracket integrally having a first bent a second bent surface and a flange surface extended from upper/lower sides of the first and second bent surfaces to be bent in one direction.

### BRIEF DESCRIPTION OF THE DRAWINGS

For fuller understanding of the nature and objects of the invention, reference should be made to the following detailed description taken in conjunction with the accompanying drawings in which:
Figure 1 is a perspective view for illustrating an exterior of a conventional automobile;
Figure 2 is a perspective view for partially illustrating an apron panel unit in an engine room of an automobile body according to the prior art;
Figure 3 is a sectional view of the apron panel unit a illustrated in Figure 2;
Figure 4 is a perspective view for partially illustrating an apron panel unit of an automobile body according to the present invention;
Figure 5 is a sectional view for illustrating the apron panel unit illustrated in Figure 4; and
Figure 6 is a perspective view of reinforcement members respectively illustrated in Figures 4 and 5.

### DETAILED DESCRIPTION OF THE INVENTION

Preferred embodiment of the present invention will now be described in detail with reference to the accompanying drawings.

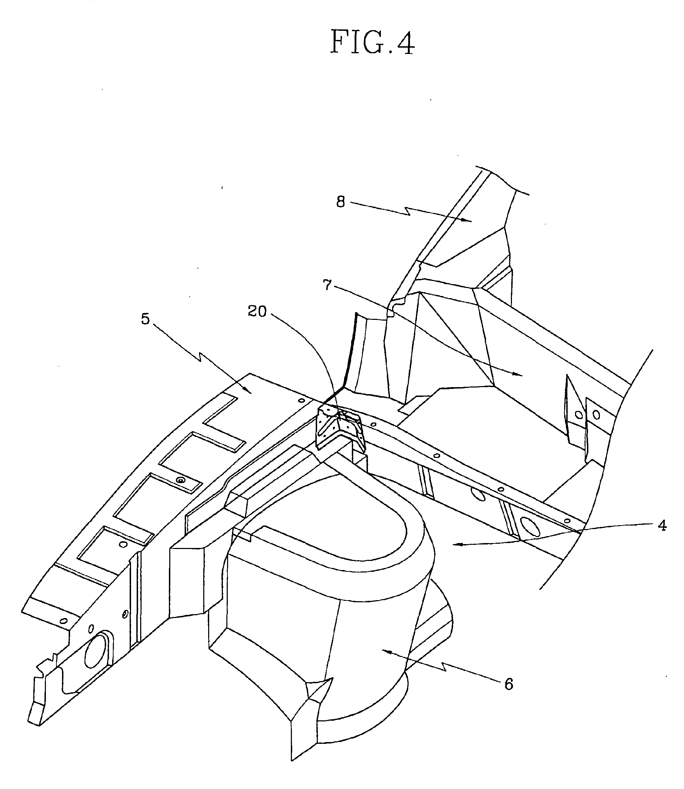

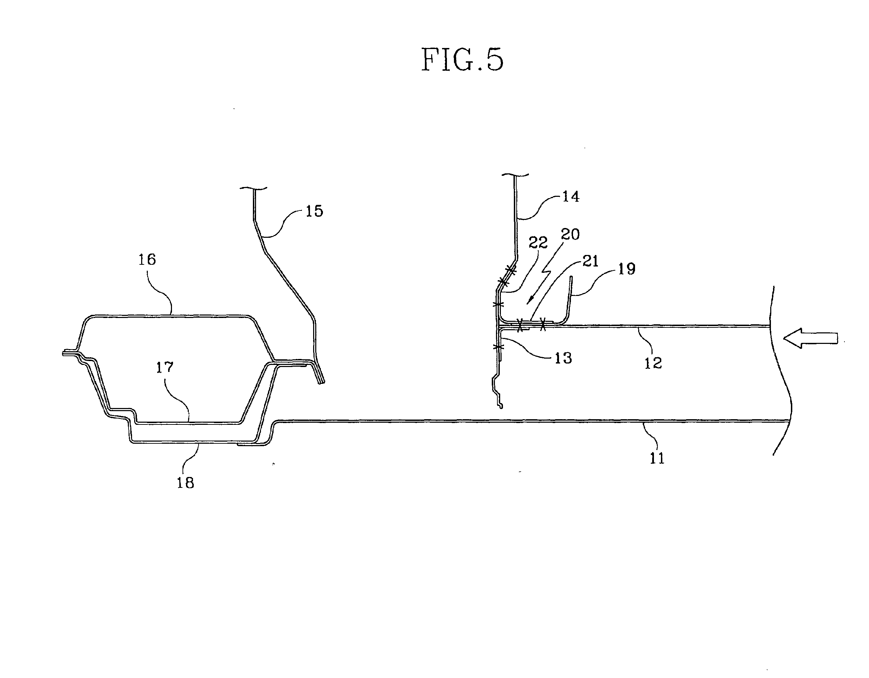

Figure 4 is a perspective view for partially illustrating an apron panel unit of automobile body according to the present invention while Figure 5 is a sectional view of the apron panel unit illustrated in Figure 4, where like reference numerals are used for designation of like or equivalent parts or units as in Figures 1 and 2 and reference numerals for principal units of front automobile body not shown will be described with reference to those of Figure 1.

As illustrated in the drawings, a front outer apron panel 11 and a front inner apron panel 12 constructing an apron unit 5 of the automobile body are respectively extended along lengthwise direction of the automobile body, where a rear end of the front inner apron panel 12 joins a front cowl panel 14 forming a cowl unit 7 via an apron extension panel 13 and a reinforcement bracket 20.

At this location, the apron extension panel 13 and the reinforcement bracket 20 are respectively reinforcement materials for securely coupling inner/outer sides of the front inner apron panel 12 and the front cowl panel 14.

Furthermore, the rear cowl panel 15 forming the cowl unit 7 along with the front filler unit 8 is coupled to tip ends of the inner filler panel 16, filler reinforcement panel 17 and outer filler panel 18 joined to formed respective closed sectional surfaces for construction of the front filler unit 8, while rear unit of the front outer apron panel 11 joins the outer filler panel 18.

Joined area between the front inner apron panel 12 and the apron extension panel 13 is coupled to a tip end of wheel housing reinforcement panel 19.

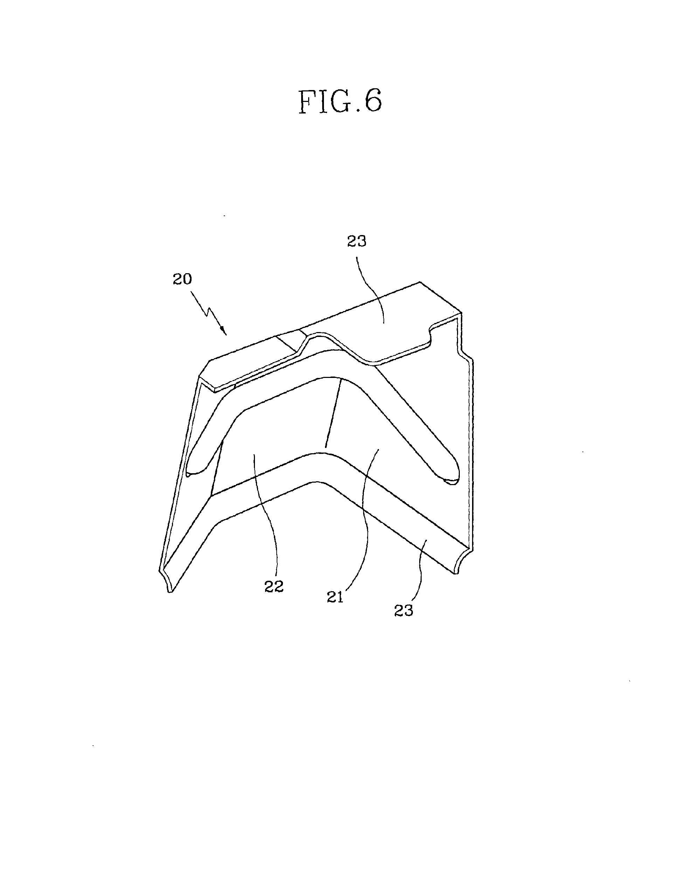

Meanwhile, the reinforcement bracket 20 for securely coupling the inner/outer sides of the front inner apron panel 12 and the front cowl panel 14 along with the apron extension panel 13 is integrally formed with first and second bent surfaces 21 and 22 each having an approximate cross-sectional shape like "¬". The first and second bent surfaces 21 and 22 are integrally mounted thereunder and thereon with flange surfaces 23 each having a member extended and bent to one direction, as illustrated in Figure 6.

The reinforcement bracket 20 serves to securely couple the front inner apron panel 12 and the front cowl panel 14, and particularly the first bent surface 21 of the reinforcement bracket 20 joins the front inner apron panel 12 and the second bent surface 22 of the reinforcement bracket 20 joins the front cowl panel 14, where the flange surface 23 of the reinforcement bracket 20 functions as an additional reinforcement to structural strength of the reinforcement bracket 20.

As a result thereof, the first bent surface 21 of the reinforcement bracket 20 is welded to join with the rear end of the first front inner apron panel 12, the apron extension panel 13 and the reinforcement bracket 20 in three fold or four fold while the second bent surface 22 of the reinforcement bracket 20 is welded to join with the front cowl panel 14 in two fold.

Consequently, when the front body is constructed as mention above, shock transmitted to the body through the apron unit 5 during an offset collision accident of an automobile passes the cowl unit 7 to be transmitted to the front filler unit 8, where joined areas at the apron unit is not separated by the shock transmitted during the offset collision because the front inner apron panel 12 is securely coupled to the front cowl panel 14 via the apron extension panel 13 and the reinforcement bracket 20.

As a result thereof, the cowl unit 7 is less pushed toward the front filler unit 8 by the shock transmitted during the offset collision, by which, degree of deformation at the front filler unit 8 is decreased to thereby promote safety of passengers inside the automobile.

As apparent from the foregoing, there is an advantage in the reinforcement structure for apron unit of automobile thus described in that a joined area between an apron unit and a cowl unit inside an engine room is further reinforced by a reinforcement member, such that even the shock transmitted to the body of an automobile during offset collision serves to minimize deformation of the cowl unit, thereby promoting safety of passengers inside the automobile.

## Claims

1. A reinforcement structure for apron unit of automobile, the apron unit formed by a rear end of a front inner apron panel thereof joined by a front cowl panel of a cowl unit via an apron extension panel wherein the rear end of the front inner apron panel joins the front cowl panel via a reinforcement bracket.

2. The structure as defined in claim 1, wherein the reinforcement bracket integrally comprises:
a first bent surface and a second bent surface respectively joining the front inner apron panel and the front cowl panel; and
a flange surface extended from upper and lower sides of the first and second bent surfaces to be bent toward one direction.
